Europäisches Patentamt

European Patent Office

Office européen des brevets

(11) Numéro de publication: **0 322 938**
**A2**

## (12) DEMANDE DE BREVET EUROPEEN

(21) Numéro de dépôt: 88202614.9

(22) Date de dépôt: **22.11.88**

(51) Int. Cl.4 **C08F 4/64 , C08F 10/00**

(30) Priorité: 03.12.87 FR 8716948

(43) Date de publication de la demande:
**05.07.89 Bulletin 89/27**

(84) Etats contractants désignés:
**AT BE DE ES FR GB IT NL**

(71) Demandeur: **SOLVAY & Cie (Société Anonyme)**
**Rue du Prince Albert, 33**
**B-1050 Bruxelles(BE)**

(72) Inventeur: **Demiddeleer, Léopold**
**Steenput, 5**
**B-1960 Sterrebeek(BE)**

(54) **Procédé pour la polymérisation des alpha-oléfines, complexes catalytiques solides utilisables pour cette polymérisation et procédé pour leur préparation.**

(57) L'invention concerne un procédé pour la polymérisation des alpha-oléfines ainsi que des complexes catalytiques solides utilisables pour cette polymérisation et un procédé pour leur préparation.

Les complexes catalytiques solides sont préparés en faisant réagir entre eux :

(1) au moins un composé choisi parmi les composés oxygénés organiques et les composés halogénés du magnésium ;

(2) au moins un composé choisi parmi les composés oxygénés organiques et les composés halogénés du titane ;

(3) au moins un halogénure d'aluminium.

L'halogénure d'aluminium est choisi parmi les chlorures organoaluminiques de formule générale statistique $AlR_nCl_{3-n}$ dans laquelle R est un radical isolbutyle et n est un nombre tel que $1,6 \leq n \leq 1,9$.

Le procédé de polymérisation permet d'obtenir, avec des activités catalytiques très élevées, des polyoléfines en particules dont la distribution granulométrique est très serrée.

EP 0 322 938 A2

## Procédé pour la polymérisation des alpha-oléfines, complexes catalytiques solides utilisables pour cette polymérisation et procédé pour leur préparation

La présente invention concerne un procédé perfectionné pour la polymérisation des alpha-oléfines. Elle concerne également des complexes catalytiques solides utilisables pour la polymérisation des alpha-oléfines et un procédé pour préparer ces complexes.

Par les brevets BE-A-791 676 du 21.11.1972 et BE-A-799 977 du 24.05.1973 au nom de la Demanderesse, il est connu d'utiliser, pour la polymérisation à basse pression des oléfines, des systèmes catalytiques comprenant un composé organométallique d'un métal des groupes Ia, IIa, IIb, IIIb et IVb du Tableau Périodique et un complexe catalytique solide obtenu en faisant réagir entre eux :

(1) un composé oxygéné organique ou un halogénure d'un métal, tels que l'éthylate de magnésium ou le dichlorure de magnésium,

(2) un composé oxygéné organique d'un métal de transition, tel que le tétrabutylate de titane, et

(3) un halogénure d'aluminium, tel que le dichlorure d'éthylaluminium.

On connaît aussi, par le brevet EP-0 000 007 du 1.06.1978, également au nom de la Demanderesse, des systèmes catalytiques dont le constituant solide est obtenu en faisant réagir entre eux les composés (1) et (2) précités et un halogénure d'aluminium (3) tel que le dichlorure d'isobutylaluminium.

Ces systèmes catalytiques sont uniques par les avantages extrêmement importants qu'ils présentent. Ainsi, leur activité et leur productivité sont très élevées. Leur préparation est extrêmement simple et ne conduit à aucun sous-produit polluant. Enfin, la morphologie du polymère obtenu permet de polymériser en suspension en continu avec une teneur relative en polymère très élevée et donc une quantité relative de diluant à traiter avant recyclage très faible.

Les systèmes catalytiques décrits dans le dernier document cité (brevet EP-0 000 007) permettent en outre d'obtenir des polyoléfines dont le pourcentage de fines particules est réduit et dont la grosseur moyenne des particules est plus élevée.

L'utilisation de tous ces systèmes catalytiques n'a toutefois pas encore permis de fournir une solution tout à fait satisfaisante en rapport avec la distribution granulométrique des particules de polyoléfines obtenues : généralement, au moins 50 % en poids des particules de polymère présentent un diamètre s'écartant de plus de 100 microns du diamètre moyen.

Cette distribution granulométrique relativement large des particules est gênante tant au niveau de la fabrication du polymère, notamment lorsqu'elle est effectuée en plusieurs étapes, qu'au niveau de sa mise en oeuvre, notamment à l'alimentation des extrudeuses.

L'élargissement de la distribution granulométrique des particules reflète en réalité une hétérogénéité des propriétés générales du polymère (viscosité, masses moléculaires, densité, ...) qui rend difficile la conduite de la polymérisation, lorsqu'elle est effectuée en continu en plusieurs étapes successives et surtout lorsque ces étapes ne se déroulent pas dans le même milieu. Ainsi, lorsque la première étape de la polymérisation est effectuée en suspension dans un diluant hydrocarboné liquide et la seconde en phase gazeuse, en particulier en lit fluidisé, une distribution granulométrique trop large perturbe le bon déroulement de cette seconde étape.

Pour ce qui concerne la mise en oeuvre, notamment par injection, les polyoléfines se présentant sous forme de particules régulières et dont un pourcentage important de particules présente un diamètre s'écartant peu du diamètre moyen,sont plus faciles à stocker, à transporter et à manipuler et sont donc préférées.

Le but principal de la présente invention est donc l'obtention de polyoléfines en particules dont la distribution granulométrique soit très serrée, tout en maintenant les propriétés avantageuses des systèmes catalytiques décrits ci-dessus.

L'invention est basée sur la découverte surprenante qu'une classe tout à fait particulière de systèmes catalytiques décrits plus haut permet d'obtenir, sans affecter les avantages inhérents à ces systèmes, des polyoléfines sous forme de particules de distribution granulométrique serrée et de poids spécifique apparent élevé.

Cette classe tout à fait particulière de systèmes catalytiques permet en outre de polymériser les alpha-oléfines avec des activités spécifiques exceptionnellement élevées. On obtient ainsi un compromis de performances catalytiques et de propriétés morphologiques du polymère que ne permettaient pas d'atteindre les systèmes catalytiques apparentés de l'art antérieur.

La présente invention concerne donc un procédé pour la polymérisation des alpha-oléfines dans lequel on opère en présence d'un système catalytique comprenant un composé organométallique d'un métal des groupes Ia, IIa, IIb, IIIb et IVb du Tableau Périodique et un complexe catalytique solide préparé en faisant réagir entre eux :

(1) au moins un composé (M) choisi parmi les composés oxygénés organiques et les composés halogénés du magnésium

(2) au moins un composé (T) choisi parmi les composés oxygénés organiques et les composés halogénés du titane

(3) au moins un halogénure d'aluminium (A), ce dernier étant choisi parmi les chlorures organoaluminiques de formule générale statistique $AlR_n Cl_{3-n}$ dans laquelle R représente un radical isobutyle et n est compris entre 1,6 et 1,9.

Le choix du réactif (3) constitue une caractéristique essentielle de l'invention. C'est en effet la nature de ce réactif qui, de manière surprenante, est à la base de la combinaison du resserrement très sensible de la distribution granulométrique des particules des polyoléfines obtenues selon le procédé de l'invention et de l'activité catalytique exceptionnellement élevée du système catalytique.

Par composés oxygénés organiques du magnésium et du titane, on entend désigner tous les composés où un radical organique quelconque est lié au métal par l'intermédiaire de l'oxygène, c'est-à-dire tous les composés comprenant au moins une séquence de liaisons métal-oxygène-radical organique par atome de métal. Les radicaux organiques liés au métal par l'intermédiaire de l'oxygène sont quelconques. Ils sont choisis de préférence parmi les radicaux comprenant de 1 à 20 atomes de carbone et, plus particulièrement, parmi ceux comprenant de 1 à 10 atomes de carbone. Les meilleurs résultats sont obtenus lorsque ces radicaux comprennent de 2 à 6 atomes de carbone. Ces radicaux peuvent être saturés ou insaturés, à chaîne ramifiée, à chaîne droite ou cycliques ; ils peuvent également être substitués ou comporter des hétéroatomes, tels que le silicium, le soufre, l'azote ou le phosphore, dans leur chaîne. Ils sont choisis de préférence parmi les radicaux hydrocarbonés et en particulier parmi les radicaux alkyles (linéaires ou branchés), alkényles, aryles, cycloalkyles, arylalkyles, alkylaryles, acyles et leurs dérivés substitués.

Par composés halogénés du magnésium et du titane, on entend désigner tous les composés comprenant au moins une liaison métal-halogène. L'halogène lié au métal peut être le fluor, le chlore, le brome ou l'iode. De préférence, l'halogène est le chlore.

Parmi tous les composés oxygénés organiques et halogénés qui conviennent, on utilise de préférence ceux qui ne contiennent que des liaisons métal-oxygène-radical organique et/ou des liaisons métal-halogène à l'exclusion de toute autre liaison.

Les complexes catalytiques solides utilisés dans la présente invention sont préparés à partir de réactifs (1) qui sont des composés (M) du magnésium.

Les composés oxygénés organiques (M) peuvent comporter, en plus des radicaux organiques liés au magnésium par l'intermédiaire de l'oxygène, d'autres radicaux. Ces autres radicaux sont de préférence l'oxygène et les radicaux inorganiques liés au métal par l'intermédiaire de l'oxygène tels que les radicaux -OH, $-(SO_4)_{1/2}$, $-NO_3$, $-(PO_4)_{1/3}$, $-(CO_3)_{1/2}$ et $-ClO_4$. Il peut s'agir également de radicaux organiques liés directement au magnésium par le carbone.

Parmi les composés (M) entrant dans la famille des composés oxygénés organiques du magnésium, on peut citer :
- les alkoxydes; tels que le méthylate, l'éthylate, l'isopropylate, le décanolate et le cyclohexanolate,
- les alkylalkoxydes, tels que l'éthyléthylate,
- les hydroxyalkoxydes, tels que l'hydroxyméthylate,
- les phénoxydes, tels que le phénate, le naphténate, l'antracénate, le phénantrénate et le crésolate,
- les carboxylates éventuellement hydratés, tels que l'acétate, le stéarate, le benzoate, le phénylacétate, l'adipate, le sébaçate, le phtalate, l'acrylate et l'oléate;
- les composés oxygénés azotés organiques, c'est-à-dire des composés comprenant des séquences de liaisons magnésium-oxygène-azote-radical organique, tels que les oximates, en particulier, le butyloximate, le diméthylglyoximate et le cyclohexyloximate, les sels d'acides hydroxylamines en particulier le dérivé de la N-nitroso-N-phényl-hydroxylamine,
- les chélates, c'est-à-dire les composés oxygénés organiques dans lequels le magnésium possède au moins une séquence de liaisons normales du type magnésium-oxygène-radical organique et au moins une liaison de coordination de manière à former un hétérocycle dans lequel le magnésium est inclus, tels que les énolates et en particulier l'acétylacétonate, ainsi que les complexes obtenus à partir de dérivés phénoliques possédant un groupe électrodonneur par exemple en position ortho ou méta par rapport au groupe hydroxyle et en particulier le 8-hydroxyquinoléinate,
- les silanolates, c'est-à-dire des composés comprenant des séquences de liaisons magnésium-oxygène-silicium-radical hydrocarboné, tels que le triphénylsilanolate.

Il est bien entendu qu'entrent également dans le cadre de l'invention les composés oxygénés organiques du magnésium suivants :

- les composés comprenant plusieurs radicaux organiques différents, tels que le méthoxyéthylate de magnésium,

- les alkoxydes et phénoxydes complexes du magnésium et d'un autre métal, tels que Mg [Al(OR)$_4$]$_2$ et Mg [Al(OR))$_5$]$_2$, et

- les mélanges de deux ou de plusieurs des composés oxygénés organiques du magnésium définis ci-dessus.

Parmi les composés halogénés du magnésium (M), on peut citer :

- les dihalogénures du type commercial qui sont appelés conventionnellement "anhydres" et qui sont en fait des dihalogénures hydratés contenant une molécule et moins d'eau par molécule de dihalogénure ; les dichlorures de magnésium "anhydres du commerce" sont un exemple typique de ces composés :

- les dihalogénures complexés au moyen de divers donneurs d'électrons, comme par exemple les complexes avec l'ammoniac, tels que MgCl$_2$.6NH$_3$, MgCl$_2$.2NH$_3$, et les complexes avec les alcools, tels que MgCl$_2$.6CH$_3$OH, MgCl$_2$.6C$_2$H$_5$OH et MgCl$_2$.6C$_3$H$_7$OH,

- les dihalogénures hydratés contenant plus d'une molécule d'eau par molécule de dihalogénure, tels que MgCl$_2$.6H$_2$O, MgCl$_2$.2H$_2$O,

- les composés comprenant, outre la liaison magnésium-halogène, un radical inorganique, lié au magnésium par l'intermédiaire de l'oxygène, tel qu'un radical hydroxyle, comme dans Mg(OH)Cl et Mg(OH)Br,

- les composés comprenant, outre la liaison magnésium-halogène (de préférence la liaison magnésium-chlore) une liaison magnésium-radical organique, de préférence une liaison magnésium-radical hydrocarboné (tel que défini plus haut), comme dans Mg(C$_2$H$_5$)Cl et Mg(C$_6$H$_5$)Cl,

- les produits de l'hydrolyse des halogénures (de préférence des chlorures) hydratés du magnésium, pour autant que ces produits contiennnent encore des liaisons magnésium-halogène,

- les compositions mixtes comprenant des composés halogènes et oxygénés du magnésium. Des exemples typiques de ces compositions sont les halogénures (de préférence les chlorures) basiques de magnésium tels que MgCl$_2$.MgO.H$_2$O, MgCl$_2$.3MgO.7H$_2$O et MgBr$_2$.3MgO.6H$_2$O,

- les mélanges de deux ou plusieurs des composés halogénés du magnésium définis ci-dessus.

Enfin, il est bien entendu que l'utilisation de deux ou plusieurs composés tels que définis ci-dessus entre également dans le cadre de la présente invention.

De même, l'utilisation de composés du magnésium contenant à la fois une liaison magnésium-halogène et un radical organique tel que défini ci-dessus lié au magnésium par l'intermédiaire de l'oxygène fait également partie de l'invention. Les composés de ce type donnant les meilleurs résultats sont bien entendu. les chloralkoxydes et les chlorphénoxydes tels que Mg(OCH$_3$)Cl, Mg(OC$_2$H$_5$)Cl et Mg(OC$_6$H$_5$)Cl par exemple.

Les meilleurs résultats sont obtenus lorsque le composé (M) du magnésium est un dialkoxyde.

Les réactifs (2) utilisés pour préparer les complexes catalytiques selon l'invention sont des composés (T) du titane. On utilise de préférence les composés du titane tétravalent parce qu'ils sont plus souvent liquides et en tout cas plus souvent et mieux solubles que ceux où ce métal se trouve à une valence inférieure à 4. Les composés oxygénés organiques (T) du titane utilisables comme réactifs (2) peuvent également être des composés comprenant des liaisons métal-oxygène et les composés condensés comprenant des séquences de liaisons métal-oxygène-métal, pourvu qu'ils comportent aussi au moins une séquence de liaisons métal-oxygène-radical organique par molécule.

On peut représenter les composés oxygénés organiques (T) par la formule générale [TiO$_x$(OR)$_{4-2x}$]$_m$ où R représente un radical organique tel que défini plus haut, où x est un nombre tel que $0 \leq x \leq 1,5$ et où m est un nombre entier. On préfère utiliser les composés oxygénés organiques où x est tel que $0 \leq x \leq 1$ et m tel que $1 \leq m \leq 6$.

L'utilisation de composés oxygénés organiques (T) comprenant plusieurs radicaux organiques différents entre également dans le cadre de la présente invention.

Parmi les composés oxygénés organiques (T) du titane, on peut citer :

- les alkoxydes, tels que Ti(OC$_2$H$_5$)$_4$, Ti(OnC$_3$H$_7$)$_4$, Ti(OnC$_4$H$_9$)$_4$, Ti(OC$_4$H$_9$)$_4$, et Ti(O-tertC$_4$H$_9$)$_4$,

- les phénoxydes, tels que Ti(OC$_6$H$_5$)$_4$,

- les oxyalkoxydes, tels que TiO(OC$_2$H$_5$)$_2$,

- les alkoxydes condensés, tels que Ti$_2$O(OiC$_3$H$_7$)$_6$,

- les carboxylates, tels que Ti(OOCCH$_3$)$_4$,

- les énolates, tels que l'acétylacétonate de titane.

Parmi les composés halogénés (T) du titane, on peut citer :

- les tétrahalogénures, tels que $TiCl_4$, $TiBr_4$,
- les halogénures complexés au moyen de divers donneurs d'électrons, tels que $TiCl_4 \cdot 6NH_3$, $TiCl_4 \cdot 2C_5H_5N$, $TiCl_4 \cdot C_4H_8O_2$,
- les halogénures complexes de titane et d'un métal alcalin, tels que $K_2TiCl_6$ et $Na_2TiCl_6$,
- les oxyhalogénures, tels que $TiOCl_2$,
- les halogénoalkoxydes, tels que $Ti(OC_2H_5)_2Cl_2$, $Ti(OC_2H_5)_3Cl$, $Ti(OiC_3H_7)_3Cl$, $Ti(OiC_4H_9)_2Cl_2$.

Les meilleurs résultats sont obtenus avec les tétraalkoxydes du titane.

Il va de soi que l'utilisation de plusieurs composés (T) différents du titane entre également dans le cadre de l'invention.

Les complexes catalytiques solides utilisables selon la présente invention sont préparés enfin à partir de réactifs (3) qui doivent être des chlorures organoaluminiques de formule générale statistique $AlR_nCl_{3-n}$ dans laquelle R représente un radical isobutyle et n est tel que $1,6 \leq n \leq 1,9$.

Ces chlorures organoaluminiques peuvent être préparés, éventuellement "in situ" et de préférence préalablement à leur mise en oeuvre, notamment en mélangeant le triisobutylaluminium avec des chlorures d'isobutylaluminium contenant plus de chlore que le chlorure que l'on souhaite obtenir ou encore en mélangeant des mono- et des dichlorures d'isobutylaluminium entre eux.

On peut préparer les complexes catalytiques solides de l'invention au départ des réactifs (1), (2) et (3) selon toutes les méthodes induisant une réaction chimique entre eux.

On préfère réaliser la réaction de formation des complexes en milieu liquide. Pour ce faire, on peut opérer en présence d'un diluant, notamment lorsque les réactifs ne sont pas liquides eux-mêmes dans les conditions opératoires ou lorsqu'il n'y a pas assez de réactifs liquides. Lorsqu'on fait usage d'un diluant, on le choisit généralement parmi ceux qui sont capables de dissoudre au moins un des réactifs et en particulier parmi les alkanes, cycloalkanes et hydrocarbures aromatiques comprenant de 4 à 20 atomes de carbone comme par exemple l'isobutane, l'hexane, l'heptane, le cyclohexane, le benzène, le toluène, etc. On peut aussi utiliser des solvants polaires comme les éthers et les alcools comprenant de 1 à 12 atomes de carbone (éthanol et éther diéthylique, par exemple), le tétrahydrofuranne, la pyridine, le chlorure de méthylène, etc. Lorsqu'on utilise un diluant dissolvant au moins un des réactifs, on préfère que la concentration totale du ou des réactifs dissous soit supérieure à 5 % en poids et de préférence à 20 % en poids par rapport au diluant.

Dans tous les cas, que l'on utilise un diluant ou qu'il y ait suffisamment de réactifs liquides dans les conditions opératoires, le milieu réactionnel se présente de préférence sous la forme d'un liquide relativement visqueux dans lequel peuvent se trouver des matières solides à l'état dispersé.

L'ordre d'addition des réactifs est quelconque. Les réactifs (3) peuvent, en particulier, être introduits dans le milieu réactionnel à n'importe quel moment de la préparation du complexe catalytique solide.

Pour des raisons de commodité, on préfère cependant préparer ces complexes catalytiques solides selon l'une des méthodes ci-après :

1) on met en présence le réactif (1) et le réactif (2) en les mélangeant progressivement ou en les ajoutant l'un à l'autre ; on ajoute ensuite progressivement le réactif (3) ;

2) on mélange, de préférence rapidement, le réactif (2) et le réactif (3), puis on ajoute le réactif (1) ;

3) on mélange simultanément et progressivement les trois réactifs.

Quelle que soit la méthode choisie, on préfère donc que l'addition du réactif (3) se fasse à la fin de la préparation des complexes catalytiques, c'est-à-dire au plus tôt pendant que les réactifs (1) et (2) sont mis en présence. Les meilleurs résultats sont obtenus lorsque le réactif (3) est mis en oeuvre après que les réactifs (1) et (2) ont été mis en présence dans leur totalité.

Les méthodes de préparation des complexes catalytiques solides selon l'invention s'étendent également à la mise en oeuvre, à la place des réactifs (1) et (2) préformés, de magnésium, d'un composé organique hydroxylé tel qu'un alcool et du réactif (2).

La préparation de pareils complexes catalytiques est décrite dans le brevet BE-A-819 609 du 6.09.1974 au nom de la Demanderesse dont le contenu est applicable en tout point au présent mode particulier de réalisation de l'invention.

La pression sous laquelle on effectue la préparation des complexes catalytiques, la vitesse d'addition des réactifs et la durée de leur contact ne sont pas des facteurs critiques. Pour des raisons de commodité, on travaille généralement sous pression atmosphérique ; la vitesse est choisie en général de manière à ne pas provoquer un échauffement brusque du milieu réactionnel dû à une auto-accélération éventuelle de la réaction ; la durée peut varier généralement entre 5 minutes et 12 heures. On agite généralement le milieu réactionnel de manière à favoriser son homogénéisation pendant la durée de la réaction. La réaction peut être réalisée en continu ou en discontinu.

La température à laquelle on met en présence le réactif (1) et le réactif (2) n'est pas critique. Pour des raisons de commodité, elle est généralement choisie entre 200 et -50°C, de préférence entre 150°C et la température ambiante (25°C). Par contre, lorsqu'on procède à la préparation des complexes catalytiques en faisant réagir le réactif (3) avec le mélange résultant de la mise en présence du réactif (1) et réactif (2), on préfère que la température à laquelle le réactif (3) est ajouté au produit résultant des réactifs (1) et (2) soit supérieure à 0°C et inférieure à la température d'ébullition sous pression ordinaire du chlorure organoaluminique, et, de préférence, comprise entre 30 et 65°C. La préparation des complexes catalytiques conformes à l'invention peut être avantageusement terminée par un traitement de mûrissage effectué à une température généralement équivalente ou supérieure à celle à laquelle a lieu la réaction avec le réactif (3) pendant une durée non critique allant de 5 minutes à 12 heures en général, de préférence pendant au moins 1 heure.

Les quantités de composé (M), de composé (T) et de chlorure organoaluminique (A) à mettre en oeuvre de préférence sont précisées ci-après.

La quantité du ou des composés (T) à utiliser est définie par rapport à la quantité totale du ou des composés (M) utilisée. Elle peut varier dans une large mesure. En général, elle est comprise entre 0,01 et 10 at.-g (atome-gramme) de métal présent dans le composé (T) par at.-g de magnésium présent dans le composé (M), de préférence entre 0,025 et 5 at.-g. de titane par at.-g de magnésium, et tout particulièrement entre 0,10 et 2 at.-g par at.-g environ.

La quantité de chlorure organoaluminique à mettre en oeuvre est définie également par rapport à la quantité totale du ou des composés (M) utilisée. Elle peut également varier dans une large mesure. En général, elle est comprise entre 1 et 100 moles de chlorure organoaluminique par mole de composé (M). De préférence, cette quantité est comprise entre 5 et 25 moles par mole. Le meilleur compromis entre l'activité spécifique (c'est-à-dire la quantité de polymère produite rapportée à la quantité de titane mise en oeuvre) des complexes catalytiques, d'une part, et la morphologie de la polyoléfine obtenue, d'autre part, est obtenu lorsque ce rapport est compris entre 12 et 20 moles par mole.

Les complexes catalytiques selon l'invention sont solides. Ils sont insolubles dans les alkanes et les cycloalkanes utilisables comme diluants. Ils peuvent être utilisés en polymérisation tels qu'ils sont obtenus, sans être séparés du milieu réactionnel de préparation. On peut toutefois les séparer de ce milieu réactionnel, notamment lorsqu'ils sont préparés en présence d'un solvant polaire, selon n'importe quel moyen connu. Lorsque le milieu réactionnel est liquide, on peut utiliser par exemple la filtration, la décantation ou la centrifugation.

Après séparation, les complexes catalytiques peuvent être lavés de manière à éliminer les réactifs en excès dont ils pourraient être encore imprégnés. Pour ce lavage, on peut utiliser n'importe quel diluant inerte et par exemple ceux qui sont utilisables comme constituants du milieu réactionnel tels que les alkanes et les cycloalkanes. Après lavage, les complexes catalytiques peuvent être séchés, par exemple, par balayage au moyen d'un courant d'azote sec ou sous vide.

Le mécanisme de la réaction de formation des complexes catalytiques de l'invention n'est pas connu. L'analyse élémentaire des complexes catalytiques, après séparation et lavage, montre qu'il s'agit bien de complexes chimiquement liés, produits de réactions chimiques, et non pas du résultat de mélanges ou de phénomènes d'adsorption. En effet, il est impossible de dissocier l'un ou l'autre des constituants de ces complexes en utilisant des méthodes de séparation purement physiques.

Les systèmes catalytiques conformes à l'invention comprennent également un composé organométallique qui sert d'activateur. On utilise les composés organométalliques des métaux des groupes Ia, IIa, IIb, IIIb et IVb du Tableau Périodique tels que les composés organométalliques du lithium, du magnésium, du zinc, de l'aluminium ou de l'étain. Les meilleurs résultats sont obtenus avec les composés organoaluminiques.

On peut utiliser des composés totalement alkylés dont les chaînes alkyles comprennent de 1 à 20 atomes de carbone et sont droites ou ramifiées tels que par exemple le n-butyllithium, le diéthylmagnésium, le diéthylzinc, le tétraéthylétain, le tétrabutylétain et les trialkylaluminiums.

On peut également utiliser les hydrures d'alkylmétaux dans lesquels les radicaux alkyles comprennent également de 1 à 20 atomes de carbone tels que l'hydrure de diisobutylaluminium et l'hydrure de triméthylétain. Conviennent également les alkylhalogénures de métaux dans lesquels les radicaux alkyles comprennent aussi de 1 à 20 atomes de carbone tels que le sesquichlorure d'éthylaluminium, le chlorure de diéthylaluminium et le chlorure de diisobutylaluminium.

On peut encore utiliser des composés organoaluminiques obtenus en faisant réagir des trialkylaluminiums ou des hydrures de dialkylaluminium dont les radicaux comprennent de 1 à 20 atomes de carbone avec des dioléfines comprenant de 4 à 20 atomes de carbone, et plus particulièrement les composés dénommés isoprénylaluminiums.

En général, on donne la préférence aux trialkylaluminiums dont les chaînes alkyles sont droites et comprennent de 1 à 18 atomes de carbone, plus particulièrement de 2 à 8 atomes de carbone.

Le procédé de l'invention s'applique à la polymérisation des oléfines à insaturation terminale dont la molécule contient de 2 à 20 atomes, et de préférence de 2 à 6 atomes de carbone, telles que l'éthylène, le propylène, le butène-1, le 4-méthylpentène-1 et l'hexène-1. Il s'applique également à la copolymérisation de ces oléfines entre elles ainsi qu'avec des dioléfines comprenant de 4 à 20 atomes de carbone de préférence. Ces dioléfines peuvent être des dioléfines aliphatiques non conjuguées telles que l'hexadiène-1,4, des dioléfines monocycliques telles que le 4-vinylcyclohexène, le 1,3-divinylcyclohexane, le cyclopentadiène ou le cyclooctadiène-1,5, des dioléfines alicycliques ayant un pont endocyclique telles que le dicyclopentadiène ou le norbornadiène et les dioléfines aliphatiques conjuguées telles que le butadiène et l'isoprène.

Le procédé de l'invention s'applique particulièrement bien à la fabrication d'homopolymères de l'éthylène et de copolymères contenant au moins 90 % molaires et de préférence 95 % molaires d'éthylène.

La polymérisation peut être effectuée selon n'importe quel procédé connu : en solution ou en suspension dans un solvant ou un diluant hydrocarboné ou encore en phase gazeuse. Pour les procédés en solution ou en suspension, on utilise des solvants ou diluants analogues à ceux employés pour la préparation du complexe catalytique : ce sont de préférence des alkanes ou des cycloalkanes tels que l'isobutane, le pentane, l'hexane, l'heptane, le cyclohexane, le méthylcyclohexane ou leurs mélanges. On peut également opérer la polymérisation dans le monomère ou un des monomères maintenu à l'état liquide. Il est particulièrement avantageux de mettre en oeuvre des procédés de polymérisation dans lesquels les polymères sont générés directement sous forme de particules. Parmi ces procédés, on préfère les procédés de polymérisation en suspension dans un diluant hydrocarboné liquide dans les conditions de polymérisation suivie d'une éventuelle étape de polymérisation en phase gazeuse, qui, après séparation du monomère qui n'a pas réagi et du diluant, fournissent, en présence de systèmes catalytiques de l'invention des particules de polymère qui ont des caractéristiques morphologiques exceptionnelles.

La pression de polymérisation est comprise en général entre la pression atmosphérique et 98 bar, de préférence 49 bar. La température est choisie généralement entre 20 et 200° C. Elle est de préférence entre 60 et 120° C de manière à obtenir directement le polymère sous forme solide.

La polymérisation peut être effectuée en continu ou en discontinu.

Le composé organométallique et le complexe catalytique peuvent être ajoutés séparément au milieu de polymérisation. On peut également les mettre en contact, à une température comprise entre -40 et 80° C, pendant une durée pouvant aller jusqu'à 2 heures, avant de les introduire dans le réacteur de polymérisation. On peut aussi les mettre en contact en plusieurs étapes ou encore ajouter une partie du composé organométallique avant le réacteur ou encore ajouter plusieurs composés organométalliques différents.

La quantité totale de composé organométallique mise en oeuvre peut varier dans une large mesure. Elle est comprise en général entre 0,02 et 50 mmoles par $dm^3$ de solvant, de diluant ou de volume de réacteur et de préférence entre 0,5 et 2,5 mmoles par $dm^3$.

La quantité de complexe catalytique mise en oeuvre est déterminée en fonction de la teneur en titane du complexe catalytique. Elle est choisie en général de manière que la concentration soit comprise entre 0,001 et 2,5 et de préférence entre 0,01 et 0,25 mat.-g de titane par $dm^3$ de solvant, de diluant ou de volume de réacteur (mat.-g = milli-atome-gramme).

Le rapport des quantités de composé organométallique et de complexe catalytique n'est pas critique non plus. On le choisit en général de manière que le rapport composé organométallique/titane exprimé en mole/at.-g soit supérieur à 1 et de préférence supérieur à 10.

Le procédé de l'invention permet de fabriquer des polyoléfines avec des productivités très élevées. Ainsi, dans l'homopolymérisation de l'éthylène, la productivité exprimée en grammes de polyéthylène par gramme de complexe catalytique mis en oeuvre dépasse régulièrement 10 000 et dans certains cas 20 000. L'activité rapportée à la quantité de métaux de transition présente dans le complexe catalytique est également très élevée. Dans l'homopolymérisation de l'éthylène, également exprimée en grammes de polyéthylène par at.-g de titane mis en oeuvre, elle dépasse régulièrement 150 000. Elle est dans tous les cas supérieure au niveau des activités conférées aux systèmes catalytiques préférés de l'art antérieur, comprenant les complexes catalytiques solides préparés à partir de dichlorure d'isobutylaluminium comme réactif (3), et elle est combinée, comme il a été dit, avec une distribution granulométrique exceptionnellement étroite des particules de polyoléfines (dans les cas les plus favorables, plus de 80 % en poids et, de préférence, au moins 90 % en poids de particules de diamètre s'écartant de moins de 100 microns du diamètre moyen).

Les polyoléfines obtenues selon l'invention peuvent être granulées et être mises en oeuvre sous forme de granules selon les techniques de moulage conventionnelles : par injection (pour laquelle la morphologie

7

obtenue convient particulièrement bien), par extrusion, par extrusion-soufflage, par calandrage, etc.

Les exemples qui suivent sont destinés à illustrer l'invention.

Exemples

On utilise les réactifs suivants :

(1) de l'éthylate de magnésium $Mg(OC_2H_5)_2$ vendu par DYNAMIT NOBEL

(2) du tétrabutylate de titane $Ti(OC_4H_9)_4$ vendu par DYNAMIT NOBEL

(3) différents chlorures organoaluminiques définis ci-après.

On prépare une solution-mère (S) en chauffant ensemble, à 150°C, sous agitation et pendant 2 heures, 9 moles du réactif (2) et 4,5 moles du réactif (1). Dans ce mélange, le rapport atomique Ti/Mg vaut donc environ 2 at.-g/at.-g.500 ml de la solution-mère (S), dans laquelle il y a eu dissolution quasi-complète du réactif (1) et qui a été préalablement refroidie, sont additionnés de 1000 ml d'hexane, de manière à obtenir une solution à environ 500 g/lit.

Les différents chlorures organoaluminiques mis en oeuvre sont :

- dans les exemples 1 et 2, selon l'invention, des mélanges de dichlorure d'isobutylalumium (IBADIC) et de chlorure de diisobutylaluminium (DIBAC) pour lesquels n vaut 1,67 (exemple 1), respectivement 1,81 (exemple 2) ;

- dans l'exemple 1R, de comparaison, un mélange de dichlorure d'isobutylaluminium (IBADIC) et de triisobutylaluminium (TIBAL) pour lesquels n vaut 1,25 ;

- dans l'exemple 2R, de comparaison, du chlorure de diisobutylaluminium (DIBAC) (n = 2) ;

- dans l'exemple 3R, de comparaison, du dichlorure d'isobutylaluminium (IBADIC) (n = 1) :

- dans l'exemple 4R, de comparaison, un mélange de dichlorure d'isobutylaluminium et de triisobutylaluminium pour lequel n vaut 2,88.

Ces chlorures organoaluminiques sont mis en oeuvre sous forme de solutions dans l'hexane à 400 g/lit. Ils sont ajoutés progressivement à des fractions de solutions-mère (S), diluées comme indiqué plus haut, à une température d'environ 50°C et sous agitation, pendant environ 90 minutes. A la fin de cette addition, le mélange réactionnel est soumis à un mûrissage pendant 1 heure à 60°C. La quantité de chlorure organoaluminique mise en oeuvre dans chacun des exemples est mentionnée, via le rapport molaire chlorure organoaluminique/éthylate de magnésium, dans le Tableau ci-après (rapport Al/Mg).

Les complexes catalytiques ainsi formés sont utilisés tels quels, sans être séparés de leur milieu réactionnel, dans des essais de polymérisation dont les conditions générales sont définies ci-dessous.

On introduit des quantités déterminées de complexe catalytique et 0,5 mmole de triéthylaluminium dans un autoclave de 1,5 l contenant 0,5 l d'hexane. La température de l'autoclave est portée ensuite à 85°C environ. On introduit de l'éthylène sous une pression partielle de 9,8 bar et de l'hydrogène sous une pression partielle de 3,92 bar.

On poursuit la polymérisation pendant 1 h sous agitation en maintenant la pression totale constante par addition continue d'éthylène. Après 1h, on dégaze l'autoclave et on recueille le polyéthylène ainsi fabriqué.

Le Tableau ci-après mentionne les conditions particulières aux exemples 1 à 4R, ainsi que les résultats obtenus et les caractéristiques morphologiques des polyéthylènes fabriqués.

Dans ce tableau :

- PSA signifie "poids spécifique apparent" du polymère et est exprimé en $kg/dm^3$. Il est mesuré, de manière connue, par écoulement après une homogénéisation d'une durée de 6 secondes dans un mélangeur à lamelles tournant à plus de 20 000 trs/min.

- la distribution granulométrique G du polymère est aussi exprimée en pourcent et est mesurée après homogénéisation dans les conditions définies ci-dessus.

- la quantité de suspension en complexe catalytique mise en oeuvre est exprimée indirectement par le poids, en mg, de titane qu'elle contient.

TABLEAU

| Exemple N° | 1 | 2 | 1R | 2R | 3R | 4R |
|---|---|---|---|---|---|---|
| Nature du chlorure organoaluminique (réactif (3)) | IBADIC/DIBAC | IBADIC/TIBAL | IBADIC/DIBAC | DIBAC | IBADIC | IBADIC/TIBAL |
| | n = 1,67 | n = 1,81 | n = 1,25 | n = 2 | n = 1 | n = 2,88 |
| Rapport Al/Mg | 18 | 20 | 18 | 24 | 12 | 17 |
| Quantité de complexe catalytique utilisée (mgTi) ( 10 % près) | 0,64 | 1,0 | 0,67 | 0,70 | 0,80 | 1,19 |
| Quantité de polyéthylène (PE) recueillie (g) | 112 | 198 | 86 | 94 | 93 | 44 |
| Activité spécifique (gPE/h x gTi x bar $C_2H_4$) | 17.400 | 19.800 | 12.900 | 13.400 | 11.600 | 3.700 |
| PSA après broyage (kg/dm³) | 0,333 | 0,326 | 0,317 | 0,330 | 0,330 | 0,300 |
| G pourcentages cumulés de particules de diamètre moyen inférieur à : | | | | | | |
| 90 microns | 0 | 0 | 0 | 0 | 0 | 0 |
| 125 microns | 0,8 | 1 | 0 | 0 | 0,5 | 6,5 |
| 250 microns | 60,1 | 56,5 | 39,5 | 42,5 | 15,7 | 20,5 |
| 355 microns | 93,4 | 96,5 | 89,2 | 89,5 | 34,0 | 25,5 |
| 500 microns | 100,0 | 100 | 100,0 | 99,0 | 55,25 | 45,8 |
| 700 microns | | | | 100,0 | 84,00 | 86,5 |
| Diamètre moyen des particules (microns) | 238 | 240 | 267 | 260 | 460 | 515 |
| % en poids de particules dont le diamètre s'écarte de moins de 100 microns du diamètre moyen | 90 | 92 | 90 | 89 | 32 | 40 |

EP 0 322 938 A2

Les résultats rassemblés dans le Tableau montrent que seuls les complexes catalytiques préparés à l'intervention des chlorures organoaluminiques selon l'invention (exemples 1 et 2) permettent d'obtenir, avec une activité spécifique supérieure, une distribution granulométrique très étroite des particules de polyéthylène.

**Revendications**

1 - Procédé pour la polymérisation des alpha-oléfines effectué en présence d'un composé organométallique d'un métal des groupes Ia, IIa, IIb, IIIb et IVb du Tableau Périodique et un complexe catalytique solide préparé en faisant réagir entre eux :
(1) au moins un composé (M) choisi parmi les composés oxygénés organiques et les composés halogénés du magnésium ;
(2) au moins un composé (T) choisi parmi les composés oxygénés organiques et les composés halogénés du titane ;
(3) au moins un halogénure d'aluminium (A)
caractérisé en ce que ce dernier est choisi parmi les chlorures organoaluminiques de formule générale statistique $AlR_nCl_{3-n}$ dans laquelle R est un radical isobutyle et n est un nombre tel que $1,6 \leq n \leq 1,9$.

2 - Procédé selon la revendication 1, caractérisé en ce que le composé (M) est choisi parmi les dialkoxydes de magnésium et le composé (T) est choisi parmi les composés de titane ne comportant que des séquences de liaisons métal-oxygène-radical organique.

3 - Procédé selon l'une des revendications 1 et 2, caractérisé en ce que les quantités de composés (T), (M) et (A) mises en oeuvre pour préparer le complexe catalytique sont telles que le rapport entre la quantité de titane et la quantité de magnésium est compris entre 0,025 et 5 at.-g/at.-g et le rapport entre la quantité de composé (A) et la quantité de composé (M) est compris entre 5 et 25 moles/mole.

4 - Procédé selon la revendication 3, caractérisé en ce que le rapport entre la quantité de composé (A) et la quantité de composé (M) est compris entre 12 et 20.

5 - Procédé pour la préparation de complexes catalytiques solides dans lequel on fait réagir entre eux :
(1) au moins un composé (M) choisi parmi les composés oxygénés organiques et les composés halogénés du magnésium ;
(2) au moins un composé (T) choisi parmi les composés oxygénés 10 organiques et les composés halogénés du titane ;
(3) au moins un halogénure d'aluminium (A)
caractérisé en ce que ce dernier est choisi parmi les chlorures organoaluminiques de formule générale statistique $AlR_nCl_{3-n}$ dans laquelle R est un radical isobutyle et n est un nombre tel que $1,6 \leq n \leq 1,9$.

6 - Complexes catalytiques solides pour la polymérisation des alpha-oléfines préparés en faisant réagir entre eux :
(1) au moins un composé (M) choisi parmi les composés oxygénés organiques et les composés halogénés du magnésium avec
(2) au moins un composé (T) choisi parmi les composés oxygénés organiques et les composés halogénés du titane et avec
(3) au moins un halogénure d'aluminium (A) caractérisé en ce que ce dernier est choisi parmi les chlorures organoaluminiques de formule générale statistique $AlR_nCl_{3-n}$ dans laquelle R est un radical isobutyle et n est un nombre tel que $1,6 \leq n \leq 1,9$.